Europäisches Patentamt

(19) European Patent Office

Office européen des brevets

(11) Numéro de publication: **0 074 313**
**B1**

(12) **FASCICULE DE BREVET EUROPEEN**

(45) Date de publication du fascicule du brevet:
06.11.85

(51) Int. Cl.⁴: **C 03 C 21/00, C 03 C 17/23**

(21) Numéro de dépôt: **82401599.4**

(22) Date de dépôt: **30.08.82**

(54) **Fabrication de vitrage réfléchissant le rayonnement infra-rouge.**

(30) Priorité: **04.09.81 FR 8116850**

(43) Date de publication de la demande:
**16.03.83 Bulletin 83/11**

(45) Mention de la délivrance du brevet:
**06.11.85 Bulletin 85/45**

(84) Etats contractants désignés:
**BE DE FR GB IT SE**

(56) Documents cités:
**FR - A - 2 017 868**
**FR - A - 2 380 997**
**FR - A - 2 391 966**
**US - A - 3 875 763**

**VERRES ET REFRACTAIRES, vol.34, no.6,
novembre-décembre 1980, résumé no.8061A130, page
844, Paris (FR), Y. TOKUDA: "Préparation de couches
conductrices d'oxyde d'étain stable ayant des
caractérisistiques reproductibles en japonais, résumé
en anglais"**

(73) Titulaire: **SAINT-GOBAIN VITRAGE, Les
Miroirs 18, avenue d'Alsace, F-92400 Courbevoie (FR)**
(84) Etats contractants désignés: **BE FR GB IT SE**

(73) Titulaire: **VEGLA Vereinigte Glaswerke GmbH, Viktoria
Allee 3-5, D-5100 Aachen (DE)**
(84) Etats contractants désignés: **DE**

(72) Inventeur: **Tribout, Jacques, 134 avenue Jean Lombard,
F-13011 Marseille (FR)**

(74) Mandataire: **Leconte, Jean-Gérard et al, Saint-Gobain
Recherche 39, Quai Lucien Lefranc,
F-93304 Aubervilliers Cedex (FR)**

## Description

La présente invention concerne des verres revêtus d'oxydes métalliques et en particulier, des verres d'isolation thermique à hautes performances, c'est-à-dire ayant de bonnes propriétés de réflexion du rayonnement infra-rouge (I.R.).

Pour fabriquer des verres revêtus d'oxydes métalliques, on dépose sur le verre chaud, des composés métalliques décomposables en oxydes à la chaleur, lesdits composés pouvant être sous forme de solution, de vapeur ou de poudre.

Les verres à bonnes propriétés de réflexion I.R., ou autrement dit à faible émissivité, sont revêtus d'oxydes de métaux semi-conducteurs (Sn, In, Cd...) avantageusement dopés par des corps donneurs d'électrons comme les halogènes et en particulier le fluor, pour améliorer la conductivité électrique et en même temps la réflexion I.R. qui lui est liée.

Ainsi la publication française de brevet 2 380 997 enseigne de projeter sur le verre, une poudre d'un composé organique d'étain, mise en suspension dans un courant de gaz porteur, dans lequel on ajoute de l'acide fluorhydrique.

Les performances en réflexion I.R. de ces verres sont très intéressantes, bien meilleures que celles obtenues sans dopage, mais on s'aperçoit qu'elles pourraient encore être améliorées si on supprimait ou tout du moins réduisait l'empoisonnement de la couche d'oxyde par le sodium présent dans le verre et qui migre dans ladite couche d'oxyde, d'autant mieux que le verre revêtu est porté à plus haute température.

Dans la publication française de brevet FR 2 017 868, on propose des moyens pour renforcer les caractéristiques mécaniques des verres revêtus de couches; on trempe les verres chimiquement et surtout on cherche à favoriser les échanges d'ions entre verre et couche tout en préservant les fortes propriétés mécaniques du verre procurées par la trempe en traitant le verre après la trempe à des températures inférieures à celles qui détruiraient les acquis de la trempe. Cette publication enseigne donc d'augmenter les échanges d'ions entre le verre et la couche, contrairement à ce qui est recherché dans le cadre de l'invention.

Pour certaines fabrications, par exemple des verres anti électricité statique, tels que ceux décrits dans la publication française de brevet FR 2 391 366, pour lesquels justement la forte conductivité n'est pas recherchée, on applique le revêtement sur un verre ne dépassant pas 540°C. Limiter la température du verre lors de l'application des composés métalliques pourrait être un moyen pour minimiser l'empoisonnement par le sodium, mais les couches d'oxydes déposées à de si basses températures ne sont pas de suffisamment bonne qualité et par conséquent, ne présentent pas de bonnes propriétés de conductivité électrique ou de réflexion I.R.

Egalement pour faire obstacle à la migration du sodium, dans le brevet FR 1 293 545, on propose de déposer, avant les composés métalliques, une sous-couche barrière de $SiO_2$ en immergeant le verre dans une solution de $SiCl_4$, mais des cristaux de NaCl se forment entre le verre et la sous-couche de $SiO_2$, cristaux qui engendrent un léger voile gênant pour la vision au travers du verre, du fait d'une augmentation de la transmission diffuse au détriment de la transmission spéculaire.

La présente invention vise à résoudre ce problème de l'empoisonnement du revêtement d'oxydes par le sodium issu du verre silico-sodo-calcique, sans créer de voile, tout en permettant le travail à une haute température, indispensable à l'obtention d'un revêtement de bonne qualité avec une bonne réflexion I.R.

Elle propose de traiter le verre silico-sodo-calcique de façon à remplacer superficiellement ses ions sodium par des ions alcalins plus gros, donc migrant plus difficilement, en particulier du potassium, sur une épaisseur n'excédant pas 40 µm, puis de projeter des composés métalliques décomposables en oxydes, sur la surface du verre ainsi traité et réchauffé à une température élevée déterminée par la nature desdits composés métalliques, et qui dans tous les cas sera supérieure à 550°C et de préférence supérieure à 600°C pour obtenir des propriétés optimales de réflexion I.R. de la couche de revêtement ainsi obtenue.

Le traitement précédent le revêtement ne doit être pratiqué que pendant un temps limité, de l'ordre de 24 à 48 heures, dans le cas d'une immersion du verre dans un bain de sel fondu, par exemple de nitrate de potassium, à température de l'ordre de 450 ou 470°C. Ainsi, en surface du verre, on remplace le sodium par du potassium, sur une épaisseur faible de l'ordre de 25 à 40 µm, sans le risque de suralcalinisation que provoquerait un traitement plus prolongé. Ainsi également on obtient un maximum de concentration en potassium, et donc un minimum de concentration en sodium, pratiquement à la surface même du verre.

Des mesures comparatives de réflexion I.R., de résistance électrique par carré, de pourcentages pondéraux de Na et de K présents dans la couche de revêtement ont été faites sur des échantillons de verre silico-sodo-calcique de 4 mm d'épaisseur, fabriqués par le procédé float, revêtus d'un film d'oxyde d'étain, d'une part des échantillons n'ayant subi aucun traitement préalable, d'autre part des échantillons ayant subi un traitement préalable d'immersion dans un bain de nitrate de potassium fondu à 460°C, pendant 24 heures, 48 heures, 72 heures ou 9 jours. Le revêtement est obtenu par projection sur le verre d'une poudre de DBTF (difluorure de dibutylétain) à l'aide d'une buse à fente telle que décrite dans le brevet français 2 427 141, disposée perpendiculairement à la direction de défilement du verre. Pour recevoir la poudre, le verre est réchauffé pendant 3 mn 15 s, dans un four à 650°C, si bien qu'il sort en fait à 620 ou 630°C. Au contact du verre chaud, la poudre de DBTF se décompose en oxyde, puis on laisse le verre se refroidir seul à température ambiante.

Les mesures de réflexion I.R. autour de 9 µm (longueur d'onde particulièrement représentative du rayonnement de l'habitat) à l'aide d'un appareil intégrateur sont données dans le tableau I ci-dessous:

### TABLEAU I

| Epaisseur du revêtement de $SnO_2$ | Substrat | Verre non traité préalablement | Verre traité préalablement | | | |
|---|---|---|---|---|---|---|
| | | | 24 h | 48 h | 72 h | 9 j |
| 100 nm | | 44% | 46% | 47% | 37% | 36% |
| 150 | | 57% | 58% | 60% | 54% | 50% |
| 200 | | 65% | 66% | 67% | 64% | 60% |

On constate que le pourcentage de réflexion I.R. est amélioré lorsque l'échantillon a subi, avant revêtement par l'oxyde de $SnO_2$, un traitement préalable par immersion dans du nitrate de potassium fondu à 460°C pendant 24 ou 48 heures et que pour des immersions plus longues, 72 heures ou 9 jours, les résultats se dégradent et sont même moins bons qu'avec du verre non traité préalablement.

Des mesures de réflexion I.R. à 2400 nm ont également été effectuées. Elles sont répertoriées dans le tableau II suivant:

### TABLEAU II

| Epaisseur du revêtement de $SnO_2$ | Substrat | Verre non traité | Verre traité préalablement | | | |
|---|---|---|---|---|---|---|
| | | | 24 h | 48 h | 72 h | 9 j |
| 100 nm | | 19% | 20% | 22% | 18% | 17,5% |
| 150 | | 31% | 32% | 33% | 30% | 29,5% |
| 200 | | 40% | 41% | 42% | 38% | 37 % |

Comme précédemment, les mesures montrent que les performances des échantillons traités par un sel de potassium pendant 24 heures ou 48 heures sont meilleures que celles des échantillons non traités ou traités pendant un temps plus long (72 heures ou 9 jours).

Les mesures de la résistance électrique par carré (en ohm par carré) répertorisées dans le tableau III suivant, font apparaitre les mêmes conclusions.

### TABLEAU III

| Epaisseur du revêtement de $SnO_2$ | Substrat | Verre non traité | Verre traité préalablement | | | |
|---|---|---|---|---|---|---|
| | | | 24 h | 48 h | 72 h | 9 j |
| 100 nm | | 60 | 55 | 52 | 90 | 90 |
| 150 | | 37 | 36 | 35 | 42 | 44 |
| 200 | | 27 | 26 | 26 | 27 | 30 |

On a également relevé, avant dépôt de la couche d'oxyde d'étain, la profondeur de pénétration du potassium dans le verre, pour les différentes durées d'immersion dans le sel de potassium. Les résultats sont contenus dans le tableau IV ci-dessous:

### TABLEAU IV

| | Verre non traité | Verre traité | | | |
|---|---|---|---|---|---|
| | | 24 h | 48 h | 72 h | 9 j |
| profondeur pénétration en μm | 0 | 28 | 37 | 46 | 59 |

Sur ces verres on a ensuite déposé un revêtement de $SnO_2$ de 320 + 10 nm, comme décrit précédemment et on a mesuré les pourcentages pondéraux de Na et de K dans ledit revêtement. Les résultats sont contenus dans le tableau V suivant:

*TABLEAU V*

| | Verre non traité | Verre traité | | |
|---|---|---|---|---|
| | | 24 h | 48 h | 9 j |
| % Na | 0,28 | 0,05 | 0,04 | 0,00 |
| % K | 0,08 | 0,28 | 0,41 | 0,50 |
| % Na + K | 0,36 | 0,33 | 0,45 | 0,50 |

On constate comme précédemment, qu'un traitement préalable de très courte durée, 24 heures, a pour effet de diminuer la quantité d'alcalins (Na + K) dans la couche de $SnO_2$, alors qu'un traitement préalable plus long a pour effet d'augmenter dans de fortes proportions cette quantité.

Les trois premiers tableaux I, II et III (réflexion I.R., résistance) montrent qu'un traitement préalable de 24 ou 48 heures améliore toujours le comportement du produit final, et que les performances sont même légèrement meilleures lorsque le traitement est de 48 heures. Alors que le tableau V n'indique une amélioration que pour un traitement de 24 heures. En fait dans le cas de dopage du composé métallique projeté sur le verre, par un halogène, en particulier dans le cas de la poudre de DBTF autodopée au fluor, il faut compléter ce tableau V par le tableau VI suivant qui indique les pourcentages pondéraux de fluor rencontrés dans la couche de 320 + 10 nm de $SnO_2$ des divers échantillons.

*TABLEAU VI*

| | Verre non traité | Verre traité | | |
|---|---|---|---|---|
| | | 24 h | 48 h | 9 j |
| % F | 1,03 | 1,44 | 1,63 | 1,38 |

Ce tableau VI montre qu'une quantité plus importante de fluor se retrouve dans la couche lorsque les verres ont été traités préalablement et cette quantité est maximale lorsque le traitement est de 48 heures. Ainsi la conductivité de la couche, qui dépend du bilan (F - Na - K) est la meilleure lorsque le traitement est de 48 heures, bien que la quantité d'alcalins (Na + K) soit plus importante que pour un traitement de 24 heures.

On constate donc qu'un traitement préalable de 24 à 48 heures est favorable dans tous les cas, que le traitement de 48 heures affectant une épaisseur de verre de 30 à 40 µm est intéressant lorsqu'il s'agit de couches de revêtement dopées aux halogènes, que le traitement plus court, 24 heures (affectant une épaisseur de verre de 25 à 30 µm) est malgré tout préférable lorsqu'on ne réalise aucun dopage, par exemple lorsqu'on projette du DBTO (di butyl oxyde d'étain).

Les gains en conductivité électrique ou en réflexion I.R. sont de l'ordre de quelques pour cents, mais ils permettent, pour une même réflexion, de diminuer l'épaisseur du revêtement, donc d'améliorer la transmission lumineuse. En particulier, la courbe de variation de transmission lumineuse en fonction de l'épaisseur du revêtement ayant la forme d'une sinusoïde décroissante amortie, de faibles diminutions d'épaisseur peuvent entrainer des gains importants de transmission, notamment dans les épaisseurs de revêtement autour de 160 nm et 40 nm.

Egalement grâce à ce traitement, il sera possible d'obtenir, pour des performances données, des couleurs jusqu'alors inaccessibles.

Les verres revêtus, bien que traités préalablement par immersion dans un bain de nitrate de potassium, ne présentent aucune des caractéristiques des verres trempés.

Le traitement préalable donné à titre d'exemple était un traitement par immersion dans un bain de nitrate de potassium fondu à environ 460°C, mais il est bien entendu que d'autres techniques de traitement par des ions K pourront être employées, en particulier des pulvérisations sur le verre, de solutions aqueuses de divers sels solubles de potassium, qui permettront de réaliser ce traitement préalable à plus haute température (550°C) et donc de l'écourter du fait de la plus grande vitesse de migration des ions K à ces plus hautes températures. On veillera cependant dans tous les cas, à n'avoir qu'un traitement au potassium, seulement à la surface du verre, sur une profondeur n'excédant 40 µm et de préférence comprise entre 25 et 40 µm, avec un maximum de la concentration en potassium, pratiquement à la surface du verre, les faibles profondeurs de traitement (25 à 30 μm) convenant principalement pour des revêtements ultérieurs à l'aide de composés métalliques non dopés et les profondeurs plus importantes 30 à 40 μm convenant mieux pour des revêtements ultérieurs à l'aide de composés métalliques dopés.

Ces traitements préalables sont particulièrement avantageux pour fabriquer des vitrages réfléchissant le rayonnement infra-rouge, mais ils peuvent également être intéressants pour fabriquer d'autres types de vitrages revêtus.

## Revendications

1. Procédé de fabrication de verre revêtu d'une couche d'oxydes métalliques obtenue par décomposition à haute température sur le verre de composés métalliques, caractérisé en ce que, pour améliorer la réflexion infra-rouge et la conductivité électrique, on remplace superficiellement le sodium du verre par des ions alcalins de plus gros diamètre, notamment du potassium, sur une épaisseur n'excédant pas 40 μm, puis on dépose les composés métalliques après avoir réchauffé le verre à une température supérieure à 550°C et de préférence supérieure à 600°C.

2. Procédé de fabrication selon la revendication 1, caractérisé en ce que le remplacement du sodium par du potassium affecte la surface du verre sur une épaisseur comprise entre 25 et 40 μm.

3. Procédé de fabrication selon la revendication 2, caractérisé en ce que le remplacement du sodium par du potassium s'opère par immersion du verre dans un bain de nitrate de potassium à une température de l'ordre de 460°C pendant un temps de 24 à 48 heures.

4. Procédé de fabrication selon la revendication 2, caractérisé en ce qu'on pulvérise sur le verre une solution aqueuse de sels de potassium à température égale ou supérieure à 550°C.

5. Procédé de fabrication selon l'une des revendications précédentes, caractérisé en ce que les composés métalliques projetés sur le verre sont des produits non dopés au fluor du type DBTO, et que le traitement préalable au potassium affecte une épaisseur de verre de l'ordre de 25 à 30 μm.

6. Procédé de fabrication selon l'une des revendications 1 à 4, caractérisé en ce que les composés métalliques projetés sur le verre sont des produits dopés aux halogènes, en particulier au fluor, comme le DBTF, et que le traitement préalable au potassium affecte une épaisseur de verre de l'ordre de 30 à 40 μm.

7. Verre réfléchissant le rayonnement infra-rouge caractérisé en ce que sur une épaisseur de 25 à 40 μm, les ions sodium du verre ont été remplacés par des ions alcalins plus gros, notamment du potassium, une couche d'oxyde métallique, notamment oxyde d'étain, déposée à une température élevée supérieure à 550°C recouvrant le verre du côté où les ions sodium du verre ont été remplacés.

8. Verre réfléchissant le rayonnement infra-rouge caractérisé en ce qu'il est obtenu par le procédé suivant l'une des revendications 1 à 6.

## Patentansprüche

1. Verfahren zur Herstellung von Glas, welches mit einer durch thermische Zersetzung von Metallverbindungen auf Glas bei hoher Temperatur gebildeten Schicht aus Metalloxiden beschichtet ist, dadurch gekennzeichnet, dass zur Verbesserung der Infrarotreflexion und der elektrischen Leitfähigkeit oberflächlich das Natrium des Glases durch AlkaliIonen mit grösserem Durchmesser, insbesondere von Kalium, auf einer Dicke nicht über 40 μm ersetzt wird und dann die Metallverbindungen nach Erhitzung des Glases auf eine Temperatur oberhalb 550°C und zwar vorzugsweise oberhalb 600°C abgelagert werden.

2. Verfahren nach Anspruch 1, dadurch gekennzeichnet, dass der Austausch des Natriums durch Kalium die Glasoberfläche auf einer Dicke zwischen 25 und 40 μm betrifft.

3. Verfahren nach Anspruch 2, dadurch gekennzeichnet, dass der Austausch von Natrium durch Kalium durch Eintauchen des Glases in ein Kaliumnitratbad mit einer Temperatur in Höhe von 460°C während einer Zeitdauer von 24 bis 48 Stunden bewirkt wird.

4. Verfahren nach Anspruch 2, dadurch gekennzeichnet, dass auf dem Glas eine wässrige Lösung von Kaliumsalzen bei einer Temperatur gleich oder höher als 550°C zerstäubt wird.

5. Verfahren nach einem der vorhergehenden Ansprüche, dadurch gekennzeichnet, dass die auf das Glas aufgebrachten metallischen Verbindungen nicht mit Fluor dotierte Produkte in Art von Dibutylzinnoxid sind, und dass die vorhergehende Behandlung mit Kalium eine Dicke des Glases von 25 bis 30 μm betrifft.

6. Verfahren nach einem der Ansprüche 1 bis 4, dadurch gekennzeichnet, dass die auf das Glas aufgespritzten Metallverbindungen mit Halogen, insbesondere Fluor dotierte Produkte, wie Dibutylzinndifluorid sind, und dass die vorhergehende Behandlung mit Kalium eine Dicke des Glases von 30 bis 40 μm betrifft.

7. Infrarot-Strahlung reflektierendes Glas, dadurch gekennzeichnet, dass auf einer Dicke von 25 bis 40 μm die Natriumionen des Glases durch grössere Alkali-Ionen, insbesondere von Kalium, ersetzt und eine Schicht aus Metalloxid, insbesondere Zinnoxid, bei einer erhöhten Temperatur über 550°C abgelagert wird, welche das Glas auf der Seite bedeckt, wo die Natriumionen des Glases ausgetauscht worden sind.

8. Infrarot-Strahlung reflektierendes Glas, dadurch gekennzeichnet, dass das Glas durch das Verfahren nach einem der Ansprüche 1 bis 6 hergestellt ist.

## Claims

1. A method of making glass coated with a layer of metal oxides obtained by decomposition at high temperature on the glass of metal compounds, characterised in that to improve infra-red reflection and electrical conductivity the sodium at the glass sur

face is replaced by alkaline ions of greater diameter, such as potassium, in a thickness not exceeding 40 μm, and the metal compounds are then deposited after heating the glass to a temperature greater than 550°C and preferably greater than 600°C.

2. A method according to claim 1, characterised in that replacement of sodium by potassium affects the glass surface in a thickness from 25 to 40 μm.

3. A method according to claim 2, characterised in that replacement of sodium by potassium is carried out by immersion of the glass in a bath of potassium nitrate at a temperature of the order of 460°C for a time from 24 to 48 hours.

4. A method according to claim 2, characterised in that an aqueous solution of potassium salts is sprayed on to the glass at a temperature of at least 550°C.

5. A method according to any of the preceding claims, characterised in that the metal compounds projected on to the glass are undoped fluoride products of the DBTO type, and in that the preceding treatment with potassium affects a thickness of the glass of the order of 25 to 30 μm.

6. A method according to one of claims 1 to 4, characterised in that the metal compounds projected on to the glass are doped halogen compounds, such as fluorine compounds, for example of the DBTF type, and in that the preceding treatment with potassium affects a thickness of the glass of the order of 30 to 40 μm.

7. Glass reflecting infra-red radiation, characterised in that in a thickness from 25 to 40 μm the sodium ions of the glass are replaced by larger alkaline ions, such as potassium, and a layer of metal oxide such as tin oxide deposited at a temperature greater than 550°C covers the glass on the side at which sodium ions have been replaced.

8. Glass reflecting infra-red radiation, characterised in that it is obtained by a method according to one of claims 1 to 6.